# EUROPÄISCHE PATENTSCHRIFT

(11) **EP 0 584 517 B1**
(45) Veröffentlichungstag und Bekanntmachung des Hinweises auf die Patenterteilung: **09.10.1996**
(21) Anmeldenummer: 93111466.4
(22) Anmeldetag: 16.07.1993
(51) Int. Cl.: F16B 37/08

(54) **Befestigungshülse zum Aufstecken auf einen Gewindebolzen**
Fixing sleeve to be attached to a threaded bolt
Chemise de fixation pour attacher à un boulon fileté

(30) Priorität: 25.08.1992 DE 9211418 U
(43) Veröffentlichungstag der Anmeldung: 02.03.1994
(73) Patentinhaber: HELLERMANN ENGINEERING GmbH, D-25421 Pinneberg (DE)
(72) Erfinder: Rathjen, Michael, D-25436 Uetersen (DE)
(74) Vertreter: Glawe, Delfs, Moll & Partner

(56) Entgegenhaltungen:
- EP-A- 0 165 026
- DE-A- 3 228 475
- DE-U- 8 529 661
- FR-A- 2 366 480
- US-A- 4 031 936

## Beschreibung

Befestigungshülsen, die entgegen der Abzugsrichtung nach innen ragende, beim Aufstecken auf einen Gewindebolzen elastisch nachgebende und in die Gewindegänge einrastende Zähne aufweisen, werden in der Art von Muttern oder Halteclips verwendet. Dabei wirkt ein Stirnende der Hülse mit der den Gewindebolzen tragenden Fläche oder einem zwischen dieser Fläche und der Hülse zu befestigenden Gegenstand zusammen. Da die Rastorgane im Zusammenhang mit den Gewindegängen des Gewindebolzens lediglich bestimmte axiale Positionen zulassen, verbleibt entweder zwischen der Stirnseite der Hülse und der Gegenfläche oder zwischen dem Ende der Rastorgane und der damit zusammenwirkenden Zahnflanke ein mehr oder weniger großes Spiel (DE-OS 32 28 475). Um dieses Spiel zu vermeiden, ist es bekannt (EP-A-0 165 026), an der Stirnfläche der Hülse einen tellerförmigen, federnden Stützfuß vorzusehen, dessen Rand axial weiter als sein zentraler, mit der Hülse verbundener Teil vorragt. Er soll etwaiges Spiel ausschalten und eine vibrationsfreie Befestigung garantieren. Dieses Ziel wird jedoch nur dann erreicht, wenn die Befestigungshülse genau rechtwinklig zur Gegenfläche montiert ist, mit der der Stützfuß zusammenwirkt. Jedoch ist diese Voraussetzung oftmals nicht erfüllt, sei es, daß der Gewindebolzen nicht rechtwinklig zur Gegenfläche angeordnet ist, sei es, daß die Befestigungshülse schief montiert ist. Dann muß die gesamte Befestigungskraft einseitig von dem Stützfuß übertragen werden, der dadurch auf der betreffenden Seite überlastet wird und seine Nachgiebigkeit einbüßt. Das liegt daran, daß die konische Tellerform einer schiefen Verformung sehr großen Widerstand entgegensetzt.

Die Erfindung will deshalb eine Befestigungshülse der im Gattungsbegriff des Anspruchs 1 genannten Art schaffen, die unter allen Montageverhältnissen eine zuverlässige Befestigung gewährleistet. Die erfindungsgemäße Lösung besteht darin, daß der tellerförmige Stützfuß mehrfach etwa radial geschlitzt ist. Dadurch kann der tellerförmige, also beispielsweise konische oder gewölbte, Stützfuß auch bei schiefer oder unebener Auflage an jeder Umfangsstelle unabhängig von den übrigen Umfangsbereichen des Stützfußes nachgeben und eine eindeutige Befestigungslage zur Verfügung stellen.

Zwar ist es bekannt (FR-A-23 66 480), bei einer normalen Gewindemutter die zugehörige Unterlegscheibe an die Mutter in solcher Weise anzuformen, daß sie vor der Verwendung etwa konische Gestalt hat, wobei sie auch radiale Schlitze enthalten kann; jedoch wird die Scheibe beim Anziehen der Mutter an die Mutter herangedrückt, so daß kein federndes Spiel vorhanden ist. Erreicht werden soll durch diese Verformung, daß die Innenfläche der Mutter an die Bolzenoberfläche zwecks Sicherung angepreßt wird. Welchem Zweck die radiale Schlitzung der Scheibe dient, ist unbekannt. Es ist auch nicht ersichtlich, daß die bekannte Mutter eine besondere Eignung für Anwendungsfälle mit geneigt verlaufender Gegenfläche hätte.

Nach einem besonderen Merkmal der Erfindung ist der Rand des Stützfußes stirnseitig rauh, insbesondere gezackt oder gezahnt, um im Eingriff mit der Gegenfläche oder irgendwelchen Kanten derselben einen erhöhten Drehwiderstand zu erzeugen, der eine Verdrehung der Befestigungshülse im Lösesinne verhindert oder erschwert. Schon die weiter oben erwähnten radialen Einschnitte können in diesem Sinne als Rauhheit wirken.

Bevorzugt wird aber eine Ausführungsform, bei welcher der stirnseitige Rand des Stützfußes zusätzlich mit einer besonderen Zahnung versehen ist. Die Wirksamkeit dieses Merkmals im Hinblick auf die Drehsicherung wird dadurch gesteigert, daß sie vom Außenrand des Stützfußes her mit einem großen Hebelarm wirkt. Ein relativ großes Drehsicherungsmoment wird bei geringen Reibkräften erzeugt. Insofern ergänzen sich die tellerförmige Ausbildung des Stützfußes und die Drehsicherung in vorteilhafter Weise.

Die Ausführung ist besonders für die Verwendung von zähelastischem Kunststoffmaterial wie Polyamid oder dergleichen geeignet. Zwar muß bei solchem Material damit gerechnet werden, daß die Federkraft des Stützfußes im Ruhezustand erlahmt; nichtsdestoweniger bleibt die Federwirkung für den Fall der Auslenkung des Stützfußes aus der Ruhelage erhalten.

Die Erfindung wird im folgenden näher unter Bezugnahme auf die Zeichnung erläutert. Darin zeigen:

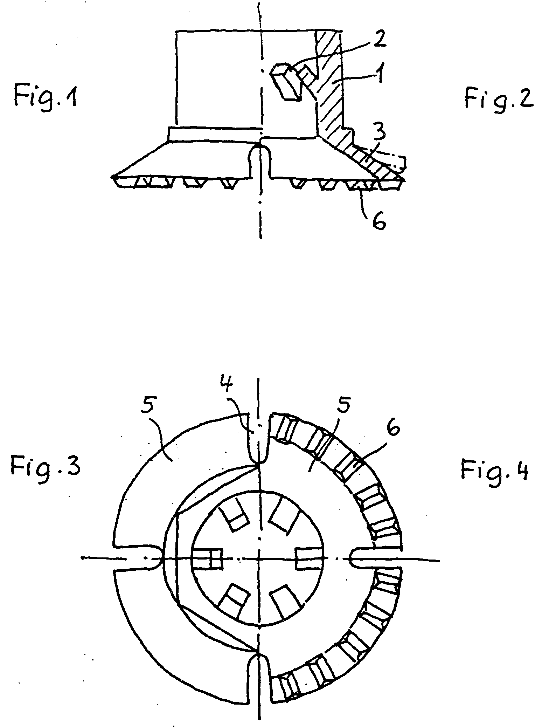

- Fig. 1 u. 2: (als Hälften einer Darstellung) eine Seitenansicht und eine Längsschnittdarstellung und
- Fig. 3 u. 4: (gleichfalls als Hälften einer Darstellung) eine Ansicht von oben bzw. von unten.

Die Befestigungshülse weist einen hohlzylindrischen Teil 1 auf, der innen Rastelemente 2 trägt, die lediglich schematisch angedeutet sind. An das untere Ende des hohlzylindrischen Teils 1, das nach der Montage auf einem Gewindebolzen derjenigen Gegenfläche zugewendet ist, von der sich der Gewindebolzen erhebt, schließt sich ein flach konischer, tellerförmiger Teil 3 an, der den Stützfuß der Befestigungshülse bildet, über den diese sich an der Gegenfläche abstützt und die Befestigungskraft überträgt. Der Stützfuß ist so dünn ausgebildet, daß er sich unter der Montagekraft in der strichpunktiert angedeuteten Weise elastisch verformen kann. Eine übermäßige, die Elastizitätsgrenze überschreitende Verformung des Stützfußes kann nicht stattfinden, weil sich vorher der zentrale Teil des Stützfußes, der mit dem hohlzylindrischen Teil 1 verbunden und nicht nachgiebig ist, an der Gegenfläche anlegt. Die Nachgiebigkeit des Stützfußes 3 wird weiter erhöht durch mehrere, im vorliegenden Fall 4 radiale Einschnitte 4, die zwischen sich zungenförmige Teile 5 des Stützfußes begrenzen. Die Einschnitte 4 bewirken ferner, daß die einzelnen Zungen sich unabhängig voneinander verformen können, so daß sie auch einer sehr unebenen und nicht lotrecht zur Achse des Befestigungselements verlaufenden Kontur der Gegenfläche zu folgen vermögen. Jedoch verläuft die Gegenfläche - abgesehen von kleineren Unebenheiten - meist konstruktionsbedingt etwa lotrecht zur Bolzenachse, so daß durch den relativ großen Durchmesser des Stützfußes gewährleistet wird, daß der hohlzylindrische Teil 1 etwa koaxial zum Gewindebolzen sitzt und daher die Rastorgane 2 nicht einseitig durch Schiefstellung überlastet werden.

An der Stirnseite des Außenrandes des Stützfußes 3 ist eine Reihe von Zähnen 6 vorgesehen, deren scharfe Kanten radial verlaufen und der Gegenfläche zugewendet sind. Da sie dank der Größe des Stützfußes über einen beträchtlichen Hebelarm wirken, vermögen sie eine Drehsicherung auch bei begrenzter Andruckkraft zu gewährleisten. Dies gilt zumal dann, wenn die Gegenfläche - wie in der Paxis häufig - Unebenheiten aufweist, an denen sich die Zähne 6 oder die Kanten der Einschnitte 4 halten können.

Die Tellerform des Stützfußes mit einem im Vergleich zum Bolzendurchmesser verhältnismäßig großen Außendurchmesser wirkt sich daher in verschiedener Hinsicht günstig aus, nämlich für die Drehsicherung, für die parallelachsige Einstellung des Befestigungselements zum Gewindebolzen und für eine gleichmäßige Kraftübertragung auch bei unebener Gegenfläche. Der Außendurchmesser des Stützfußes beträgt in dem vorteilhaften, dargestellten Beispiel etwa das 3,5-fache des Gewindebolzen-Außendurchmessers. Das Verhältnis sollte mindestens 2, vorzugsweise mindestens 3 sein.

## Patentansprüche

1. Befestigungshülse zum Aufstecken auf einen Gewindebolzen, die in die Gewindegänge eingreifende Rastorgane und einen tellerförmigen, federnden Stützfuß (3) aufweist, dessen Rand axial weiter als sein zentraler, mit der Hülse verbundener Teil vorragt, dadurch gekennzeichnet, daß der Stützfuß (3) mehrfach etwa radial geschlitzt ist.

2. Befestigungshülse nach Anspruch 1, dadurch gekennzeichnet, daß der Rand des Stützfußes (3) stirnseitig rauh, insbesondere mit Zähnen (6) oder Zacken ausgebildet ist.

3. Aus einem Gewindebolzen und einer darauf aufzusteckenden Befestigungshülse gemäß Anspruch 1 oder 2 bestehende Befestigungsanordnung, dadurch gekennzeichnet, daß der Durchmesser des Stützfußes (3) mindestens zweimal so groß ist wie der des Gewindebolzens.

## Claims

1. A fastening sleeve to be fitted on a threaded bolt, which has locating members engaging into the threads and a cup-shaped resilient support foot (3), the rim of which protrudes axially to a greater extent than its central part connected with the sleeve, characterised in that the support foot (3) is multiply slotted approximately radially.

2. A fastening sleeve according to Claim 1, characterised in that the rim of the support foot (3) is formed rough at the end face, in particular is formed with teeth (6) or prongs.

3. A fastening assembly comprising a threaded bolt and a fastening sleeve to be fitted thereon according to Claim 1 or 2, characterised in that the diameter of the support foot (3) is at least twice as large as that of the threaded bolt.

## Revendications

1. Douille de fixation destinée à être emboîtée sur un boulon fileté et comprenant des organes d'encliquetage qui entrent en prise avec le pas de vis et un pied d'appui à ressort (3) en forme de rondelle conique dont le bord est plus saillant en direction axiale que sa partie centrale raccordée à la douille, caractérisée en ce que le pied d'appui (3) présente plusieurs entailles à peu près radiales.

2. Douille de fixation selon la revendication 1, caractérisée en ce que le bord du pied d'appui (3) est réalisé sous forme rugueuse sur sa surface frontale, en particulier avec des dents (6) ou des pointes.

3. Dispositif de fixation, se composant d'un boulon fileté et d'une douille de fixation selon la revendication 1 ou 2, à emboîter sur celui-ci, caractérisé en ce que le diamètre du pied d'appui (3) est au moins deux fois plus grand que celui du boulon fileté.
